# EUROPÄISCHE PATENTSCHRIFT

(11) **EP 2 196 399 B1**
(45) Veröffentlichungstag und Bekanntmachung des Hinweises auf die Patenterteilung: **21.08.2013**
(21) Anmeldenummer: 09177574.2
(22) Anmeldetag: 01.12.2009
(51) Int. Cl.: B65D 5/02, C09J 7/04

(54) **VERFAHREN ZUM VERSCHLIEßEN VON KARTONS ODER KARTONÄHNLICHEN VERPACKUNGEN MIT DOPPELSEITIG KLEBEND AUSGERÜSTETEM KLEBEBAND**
METHOD FOR SEALING CARTONS OR CARTON-LIKE PACKAGING WITH DOUBLE-SIDED ADHESIVE TAPE
PROCÉDÉ DE FERMETURE DE BOÎTES DE CARTONS OU D'EMBALLAGES EN CARTON AVEC BANDE ADHÉSIVE DOUBLE FACE

(30) Priorität: 09.12.2008 DE 102008060905
(43) Veröffentlichungstag der Anmeldung: 16.06.2010
(73) Patentinhaber: TESA SE, 20253 Hamburg (DE)
(72) Erfinder: Schwertfeger, Michael, 22147 Hamburg (DE)

(56) Entgegenhaltungen:
- EP-A1- 0 795 480
- EP-A1- 1 285 853
- EP-A1- 1 469 053
- DE-A1- 10 151 818
- FR-A1- 2 632 609
- US-A- 5 893 514
- US-A1- 2007 063 008

## Beschreibung

Die Erfindung betrifft ein Verfahren zum Verschließen von Kartons oder kartonähnlichen Verpackungen.

Kartons oder kartonähnliche Verpackungen aus Well- oder Vollpappe können mit doppelseitigen Klebebändern verschlossen werden. Hierzu wird das Klebeband zumeist von einer Rolle abgelängt und mit der offenen klebenden Seite auf den Karton an der gewünschten Stelle, zum Beispiel einer Lasche, aufgeklebt. Die andere Seite des doppelseitig klebenden Klebebands ist üblicherweise mit einer Abdeckung versehen, die zum Verkleben und somit vor dem Verschließen des Kartons von der Klebmasse entfernt werden muss. Erst nach dem Entfernen dieser Abdeckung kann beispielsweise die Lasche auf den Karton gedrückt werden, um auf diese Weise den Karton sicher zu verschließen.
Das Verspenden des Klebebands findet in modernen Herstellungsverfahren für derartige Verpackungen automatisch statt. Das Klebeband wird auf die endlose Kartonbahn verspendet und anschließend erfolgt die Zustanzung der Bögen, aus denen sich jeweils die Verpackungen ergeben. Auch die Auffaltung und das Verschließen der Verpackung erfolgt automatisch.

Um das Entfernen der Abdeckung vor dem Verkleben zu vereinfachen, sind verschiedene Möglichkeiten bekannt.

Eine Möglichkeit besteht darin, die Abdeckung seitlich breiter als den Klebestreifen auszuführen. Dadurch entsteht ein der Fachwelt bekannter, so genannter "Fingerlift". Dieser erleichtert das Entfernen, weil der über die Klebemasse überstehende Bereich der Abdeckung das Greifen der Abdeckung deutlich erleichtert. Dies gelingt um so besser, je breiter dieser Überstand ist.
Ein derartiges Klebeband ist in der DE 101 38 350 A1 beschrieben.

Auf der anderen Seite ist ein möglichst breiter Überstand mit erheblichem Mehraufwand bei der Herstellung des Klebebandes verbunden. Die bekannten Abmessungen derartiger Fingerlifts stellen daher einen Kompromiss zwischen Aufwand bei der Herstellung, Materialverbrauch und leichter Entfernbarkeit dar.

Der Erfindung liegt die Aufgabe zugrunde, ein Verfahren zum Verschließen von Kartons oder kartonähnlichen Verpackungen unter Verwendung eines doppelseitig klebend ausgerüsteten Klebebands zur Verfügung zu stellen, das ein zuverlässiges schnelles Verschließen von Kartons ermöglicht.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Demgemäß wird ein doppelseitig klebendes insbesondere zum Verschließen von Kartons oder kartonähnlichen Verpackungen geeignetes Klebeband beschrieben, wobei das Klebeband einen Träger aufweist, der beidseitig mit einer Klebemasse ausgerüstet ist und wobei das Klebeband zumindest einseitig mit einem Abdeckmaterial eingedeckt ist.
Als Abdeckmaterial - im Folgenden auch Liner genannt - wird eine Polyolefinfolie mit einer Reißdehnung von mindestens 200 % und einer Reißfestigkeit von mindestens 12 N/mm² eingesetzt. Das Abdeckmaterial weist eine Reißdehnung von mindestens dem 5-fachen der Reißdehnung des Trägers und/oder eine Reißfestigkeit von mindestens dem 1,5-fachen des Trägers auf.

Gemäß einer vorteilhaften Ausführungsform der Erfindung besteht der Liner aus LDPE.

Gemäß einer weiteren bevorzugten Ausführungsform der Erfindung beträgt die Dicke des Liners 45 bis 200 µm, vorzugsweise 75 bis 125 µm.

Weiter vorzugsweise weist der Träger eine Reißdehnung von höchstens 4 % und eine Reißfestigkeit von höchstens 15 N/mm² auf, insbesondere eine Reißdehnung von höchstens dem 0,05-fachen des Liners und/oder eine Reißfestigkeit von höchstens dem 0,6-fachen des Liners.

Gemäß einer weiteren vorteilhaften Ausführungsform der Erfindung ist der Träger ein Vliesträger.

Bei dem Vlies handelt es sich vorzugsweise um ein nassfestes Langfaservlies. Derartige Vliese finden breite Verwendung in der Herstellung von Teebeuteln. Dies so genannte Teebeutelpapier (siehe DIN 6730) ist ein leichtgewichtiges (12 g/m² bis 20 g/m²), hochporöses, nassfestes Filterpapier, welches aus langen Fasern pflanzlicher Herkunft (zum Beispiel Manilahanf) und einem kleinen Anteil Synthesefasern (> 30 Gew.-%) hergestellt wird.

Die Dicke eines derart geeigneten Vlieses beträgt beispielsweise 38 µm, das Flächengewicht 13 g/m².

In einer Variante können auch Seidenpapiere Verwendung finden.
In einer anderen Variante werden so genannte Luftpostpapiere eingesetzt. Es handelt sich dabei um ein sehr dünnes, festes und meist holzfreies Schreibpapier mit einem Flächengewicht von 16 bis 30 g/m².

Die Dicke des Trägers liegt vorzugsweise zwischen 15 und 200 µm, besonders bevorzugt zwischen 30 und 140 µm, ganz besonders bevorzugt zwischen 30 und 50 µm.

Als Klebeband wird ein Träger mit einer selbstklebenden oder einer hitzeaktivierbaren Klebstoffschicht bevorzugt, die auf jeder der beiden Seiten des Klebebands vorhanden sind, wobei die beiden Klebemassen nicht identisch sein müssen, vorzugsweise es aber sind. Vorzugsweise handelt es sich jedoch nicht um siegelfähige Klebstoffe, sondern um Haftkleber. Der Träger wird für die Klebebandanwendung ein-oder beidseitig mit Haftkleber als Lösung oder Dispersion oder 100 %ig (zum Beispiel aus der Schmelze) beschichtet. Die Klebeschicht(en) kann durch Wärme oder energiereiche Strahlen vernetzt werden. Insbesondere sind Haftkleber auf Basis Acrylat, Naturkautschuk, thermoplastischem Styrolblockcopolymer oder Silikon geeignet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α - oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Des Weiteren kann die Klebemasse mit üblichen UV-Absorbern, Lichtschutz- und Alterungsschutzmitteln abgemischt sein.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Eine bevorzugte Ausführungsform enthält einen Haftkleber aus Naturkautschuk, Kohlenwasserstoffharz und Antioxidant.

Die Beschichtungsstärke mit Klebemasse liegt vorzugsweise im Bereich von 18 bis 50 g/m², insbesondere 22 bis 29 g/m².

Die Breite des Klebebands liegt vorzugsweise zwischen 10 und 25 mm, besonders bevorzugt zwischen 12 und 19 mm.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Die Erfindung umfasst ein Verfahren zum Verschließen eines Kartons oder einer kartonähnlichen Verpackung, indem:
- eine Kartonbahn oder eine Bahn aus einem kartonähnlichen Stoff mit einem doppelseitig klebenden Klebeband ausgerüstet wird, dessen freie Seite mit einem Abdeckmaterial eingedeckt ist,
- Stanzen der einzelnen Faltzuschnitte derart, dass das Klebeband sich über eine Lasche erstreckt und auf einem Anfasserbereich endet, der sich an der Lasche befindet,
- Perforieren der Linie zwischen Anfasserbereich und Lasche, wobei das Stanzen und das Perforieren bevorzugt in einem gleichzeitig stattfindenden Arbeitsprozess erfolgen,
- Auffalten des Kartons,
- Abtrennen des Anfasserbereichs an der Perforationslinie von der Lasche,
- dabei gleichzeitig Durchtrennen des Klebebands,
- Abziehen des Abdeckmaterials vom Klebeband mithilfe des Anfassers,
- Verpressen des Klebebands und damit der Lasche auf dem Karton.

Insbesondere der Verfahrensschritt des Auffaltens des Kartons kann auch zu späteren Zeitpunkten stattfinden, beispielsweise auch erst nach dem Verpressen des Klebebands und damit der Lasche auf dem Karton, alternativ zwischen Abziehen des Liners und Verpressen des Klebebands.

Die Perforation zwischen Anfasserbereich und Verschlusslasche wird so gestaltet, dass das gewählte Verpackungsmaterial (Wellpappe, Vollpappe) beim Ziehen am Anfasser leicht durchtrennt wird. Hierbei wird das Trägermaterial des erfindungsgemäßen Klebebandes aufgrund seiner geringen Reißfestigkeit und Reißdehnung sicher mit durchtrennt.
Die Abdeckung des erfindungsgemäßen Klebebandes wird dagegen aufgrund ihrer höheren Reißfestigkeit sicher zusammenhalten. Jetzt kann mit dem Anfasser die Abdeckung auch vom Klebeband auf der Verschlusslasche sicher entfernt werden.

In einer alternativen Ausführungsform geht die Perforationslinie zusätzlich durch das Klebeband und ist im Wesentlichen senkrecht zur Längsrichtung des Klebebands (also in Querrichtung) ausgerichtet.
Der Träger des Klebebands wird durch die zusätzliche mechanische Schwächung noch leichter durchtrennt, während der Liner aufgrund der deutlich höheren Reißdehnung auch an den schmalen Stegen im Bereich der Perforation nicht durchtrennt werden kann.

Das in dem beschriebenen Verfahren einsetzbare Klebeband kann aus einer einzigen Klebemassenschicht bestehen (üblicherweise als trägerloses Fix bezeichnet). Gemäß einer vorteilhaften Ausführungsform weist das Klebeband einen Träger auf, auf den beidseitig Klebemassen aufgebracht sind.

Besonders vorteilhaft ist die Kombination des erfindungsgemäßen Klebebands mit dem erfindungsgemäßen Verfahren.

Folgende Prüfmethoden werden angewandt, um die angegebenen Parameter zu bestimmen:

| | |
|---|---|
| Dicke: | DIN/EN 1942 Ausgabe 2008 |
| Reißfestigkeit: | DIN 29864 Ausgabe 2007 in Längsrichtung |
| | DIN EN ISO 527-3 Ausgabe 2003 |
| Reißdehnung: | DIN EN ISO 527-3 Ausgabe 2003 |
| Klebtechnische Daten: | ISO 29862 Ausgabe 2007 |

Nachfolgend wird eine beispielhafte Ausführungsform des erfindungsgemäßen Klebebands beschrieben.

### Beispiel

Eigenschaften des Klebebands:

| | | | |
|---|---|---|---|
| | Dicke: | 115 µm | |
| | Reißdehnung | 3% | |
| | Reißfestigkeit | 8 N/mm² | |
| | | | |
| Träger: | | Nassfestes Langfaservlies mit einer Dicke von 38 µm und einem Flächengewicht 13 g/m² | |
| Klebemasse: | | harzgemischte Acrylatmasse | |
| | | Auftrag: beidseitig 25 g/m² | |
| Liner | | LDPE | |
| | | Dicke 80 µm | |
| | | Reißdehnung | 250 % |
| | | Reißfestigkeit | 15 N/mm² |

Im Folgenden soll die Erfindung anhand mehrerer Figuren näher erläutert werden, ohne damit die Erfindung unnötig einschränken zu wollen.

Es zeigen
- Figur 1: einen Karton, der nahezu vollständig aufgefaltet ist, wobei eine Verschlusslasche mit einem Klebebandstreifen ausgerüstet ist,
- Figur 2: den Karton kurz vor dem vollständigen Verschließen, wozu vom Klebeband auf der Verschlusslasche das Abdeckmaterial entfernt wird, und
- Figur 3: in einer alternativen Ausführungsform einen Karton, der nahezu vollständig aufgefaltet ist, wobei eine Verschlusslasche mit einem Klebebandstreifen ausgerüstet ist.

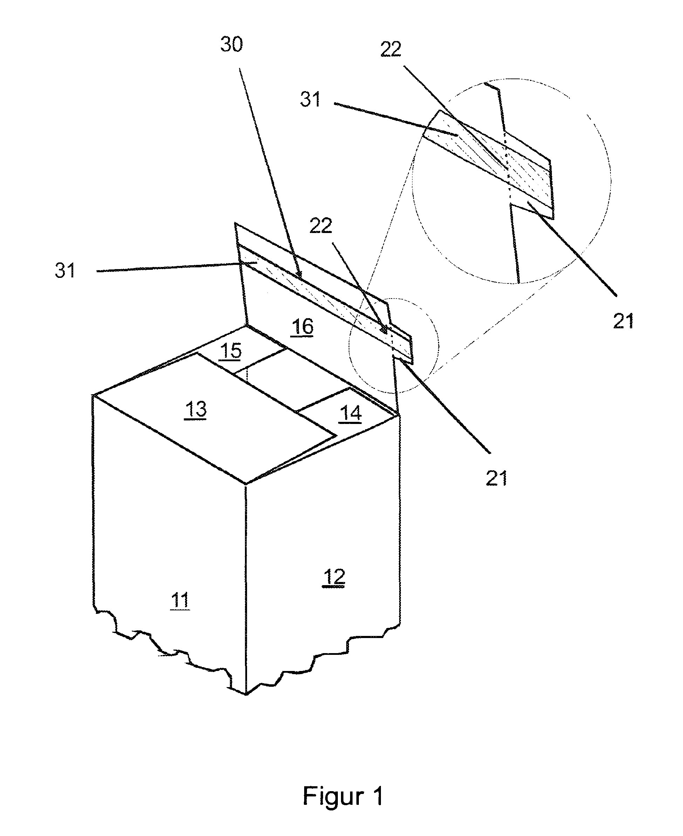

In der Figur 1 ist ein Karton gezeigt, der nahezu vollständig aufgefaltet ist. Der Karton besteht aus einem Korpus, der sich aus vier Seitenwänden 11, 12 zusammensetzt. Der Deckelbereich besteht aus insgesamt vier Verschlusslaschen 13, 14, 15, 16, die in bekannter Art den Karton verschließen. Hierzu werden zwei sich gegenüberliegende Laschen 14, 15 nach innen um 90° umgefaltet, die vorletzte Lasche 13 ebenfalls um 90° gefaltet, so dass diese die zwei ersten Laschen 14, 15 teilweise verdeckt. Zum Verschließen des Kartons wird die vierte Verschlusslasche 16 umgefaltet und auf der Verschlusslasche 13 verklebt.
Erfindungsgemäß wird hierzu ein Klebestreifen 30 verwendet, der auf der Verschlusslasche 16 verklebt ist. Der Klebestreifen 30 besteht aus einem doppelseitig klebenden Klebeband 32, das mit einem Abdeckmaterial 31 eingedeckt ist. Das Klebeband 30 ist derartig auf der Verschlusslasche 16 verklebt, dass die von der Abdeckung 31 befreite Klebemasse mit der Verschlusslasche 31 verkleben kann, was den Karton verschließt. Der Klebestreifen wird bei der Herstellung der Kartonage automatisch über die ganze Länge appliziert. Dann werden einzelne Bögen abgelängt, aus denen später die Kartonagen gestanzt werden. Die Kartonagen werden so gestanzt, dass an der Verschlusslasche 16 ein Anfasserbereich 21 entsteht, wobei das Klebeband 30 auch über den Anfasserbereich 21 verläuft. Gleichzeitig wird die Verbindung zwischen Anfasserbereich 21 und Verschlusslasche 16 durch eine Perforation 22 geschwächt. Diese Perforation 22 schwächt dabei auch das Klebeband 32 samt Abdeckmaterial 31. Dies zeigt deutlich die Detailansicht in der Figur 1.

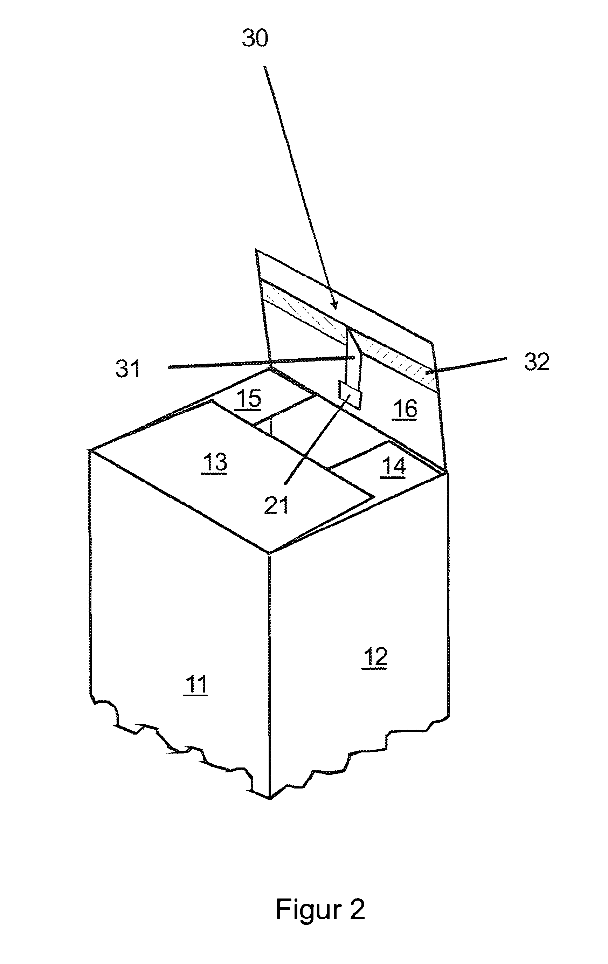

Um den Karton vollständig zu verschließen, muss vom Klebeband 32 auf der Verschlusslasche 16 das Abdeckmaterial 31 entfernt werden. Hierzu wird der Anfasser 21 an der Perforation 22 von der Verschlusslasche 16 abgetrennt, gleichzeitig das auf dem Anfasser 21 befindliche Klebeband 32 durchtrennt. Aufgrund der erfindungsgemäß vorgeschlagenen Eigenschaften des Klebebandträgers und der Abdeckung 31 wird nur das Klebeband 32 durchtrennt, die Abdeckung 31 bleibt unversehrt und bleibt an dem auf dem Anfasser 21 befindlichen Klebebandrest haften, wie es in der Figur 2 dargestellt ist.

Wird der Anfasser 21 jetzt parallel zur Ausrichtung des Klebebands 32 über die Verschlusslasche 16 gezogen, löst sich die Abdeckung 31 von dem auf der Lasche 16 befindlichen Klebeband 32 und kann so sicher entfernt werden. Abschließend wird die Verschlusslasche 16 mit dem freigelegten Klebeband 32 auf die Verschlusslasche 13 verpresst, der Karton ist verschlossen.

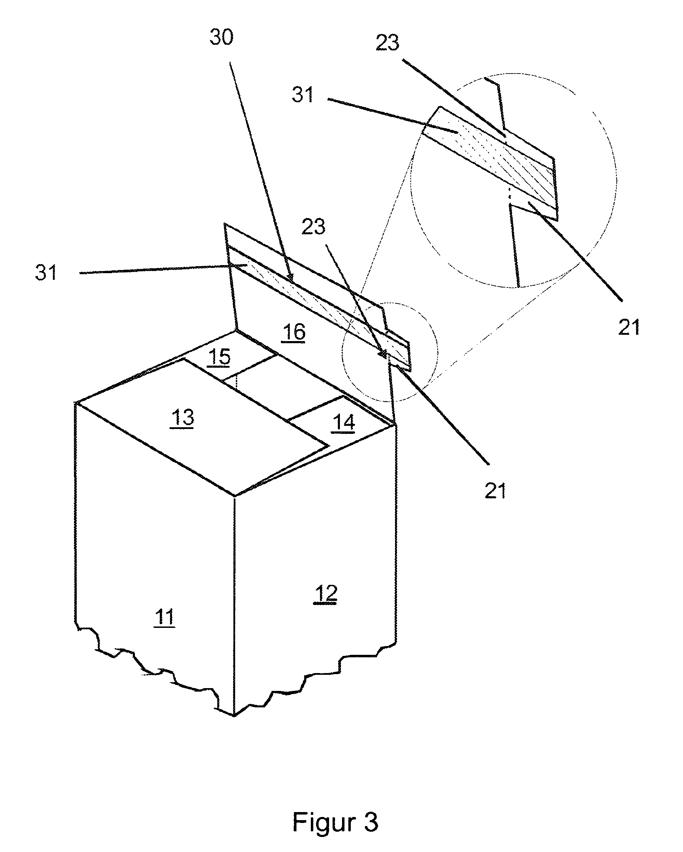

Gemäß einer alternativen Ausführungsform wird zwar die Verbindung zwischen Anfasserbereich 21 und Verschlusslasche 16 durch eine Perforation 23 geschwächt, diese Perforation erstreckt sich aber nicht durch das Klebeband 32 samt Abdeckmaterial 31. Dies zeigt deutlich die Detailansicht in der Figur 3.
Bevorzugt ist, wenn das Klebeband 32 nicht durch eine Perforation oder sonst wie geschwächt ist, sondern das Klebeband 32 allein aufgrund der erfindungsgemäßen Ausgestaltung des Trägers des Klebebands 32 durchreißt, während das Abdeckmaterial 31 unversehrt bleibt.

## Patentansprüche

1. Verfahren zum Verschließen eines Kartons oder einer kartonähnlichen Verpackung, indem
• eine Kartonbahn oder eine Bahn aus einem kartonähnlichen Stoff mit einem doppelseitig klebenden Klebeband ausgerüstet wird, dessen freie Seite mit einem Abdeckmaterial eingedeckt ist,
wobei das Klebeband einen Träger aufweist, der beidseitig mit einer Klebemasse ausgerüstet ist und wobei das Klebeband zumindest einseitig mit einem Abdeckmaterial eingedeckt ist,
wobei als Abdeckmaterial eine Polyolefinfolie mit einer Reißdehnung von mindestens 200 % und einer Reißfestigkeit von mindestens 12 N/mm² gemäβ Prüfmethode DIN EN ISO 527-3 Ausgabe 2003 eingesetzt wird und
das Abdeckmaterial eine Reißdehnung von mindestens dem 5-fachen der Reißdehnung des Trägers und/oder eine Reißfestigkeit von mindestens dem 1,5-fachen des Trägers gemäβ Prüfmethode DIN EN ISO 527-3 Ausgabe 2003 aufweist
• Stanzen der einzelnen Faltzuschnitte des Kartons derart, dass das Klebeband sich über eine Lasche des Kartons erstreckt und auf einem Anfasserbereich endet, der sich an der Lasche befindet,
• Perforieren der Linie zwischen Anfasserbereich und Lasche,
• Auffalten des Kartons,
• Abtrennen des Anfasserbereichs an der Perforationslinie von der Lasche,
• dabei gleichzeitig Durchtrennen des Klebebands,
• Abziehen des Abdeckmaterials vom Klebeband mithilfe des Anfassers,
• Verpressen des Klebebands und damit der Lasche auf dem Karton

2. Verfahren nach Anspruch 1, **dadurch gekennzeichnet, dass** die Perforationslinie zusätzlich durch das Klebeband geht und senkrecht zur Längsrichtung des Klebebands ausgerichtet ist.

3. Verfahren nach Anspruch 1 oder 2,
**dadurch gekennzeichnet, dass**
das Klebeband einen Träger aufweist, auf den beidseitig Klebemassen aufgebracht sind.

4. Verfahren nach zumindest einem der vorherigen Ansprüche,
**dadurch gekennzeichnet, dass**
der Träger eine Reißdehnung von höchstens 4 % und eine Reißfestigkeit von höchstens 15 N/mm² gemäβ Prüfmethode DIN EN ISO 527-3 Ausgabe 2003 aufweist, insbesondere eine Reißdehnung von höchstens dem /1../1.; 0,05-fachen des Abdeckmaterials und/oder eine Reißfestigkeit von höchstens dem 0,6-fachen des Abdeckmaterials gemäβ Prüfmethode DIN EN ISO 527-3 Ausgabe 2003.

5. Verfahren nach zumindest einem der vorherigen Ansprüche,
**dadurch gekennzeichnet, dass**
das Abdeckmaterial aus LDPE besteht.

6. Verfahren nach zumindest einem der vorherigen Ansprüche,
**dadurch gekennzeichnet, dass**
der Träger ein Vliesträger ist, vorzugsweise ein nassfestes Langfaservlies, besonders bevorzugt ein Teebeutelpapier.

7. Verfahren nach zumindest einem der vorherigen Ansprüche,
**dadurch gekennzeichnet, dass**
die Dicke des Liners 45 bis 200 µm, vorzugsweise 75 bis 125 µm beträgt.

## Claims

1. Method for sealing a carton or a carton-like packaging, in which
• a carton web or a web of a carton-like material is finished with a double-sided adhesive tape, the free side of which is covered by a covering material,
the adhesive tape having a carrier which is finished on both sides with an adhesive compound and the adhesive tape being covered at least on one side by a covering material,
a polyolefin film having an elongation at break of at least 200% and a tensile strength of at least 12 N/mm², according to testing method DIN EN ISO 527-3 edition 2003, being used as covering material, and
the covering material having an elongation at break of at least 5 times the elongation at break of the carrier and/or a tensile strength of at least 1.5 times that of the carrier, according to testing method DIN EN ISO 527-3 edition 2003,
• punching of the individual folding blanks of the carton in such a manner that the adhesive tape extends across a flap of the carton and terminates on a grip-tab region which is located on the flap,
• perforating the line between grip-tab region and flap,
• folding up the carton,
• detaching the grip-tab region from the flap along the perforation line,
• thereby simultaneously severing the adhesive tape,
• pulling off the covering material from the adhesive tape by means of the grip-tap,
• pressing the adhesive tape and thus the flap on the carton.

2. Method according to Claim 1, **characterized in that** the perforation line additionally runs through the adhesive tape and is perpendicularly oriented to the longitudinal direction of the adhesive tape.

3. Method according to Claim 1 or 2, **characterized in that** the adhesive tape has a carrier onto both sides of which adhesive compounds have been applied.

4. Method according to at least one of the preceding claims, **characterized in that** the carrier has an elongation at break of at most 4% and a tensile strength of at most 15 N/mm², according to testing method DIN EN ISO 527-3 edition 2003, in particular an elongation at break of at most 0.05 times that of the covering material and/or a tensile strength of at most 0.6 times that of the covering material, according to testing method DIN EN ISO 527-3 edition 2003.

5. Method according to at least one of the preceding claims, **characterized in that** the covering material consists of LDPE.

6. Method according to at least one of the preceding claims, **characterized in that** the carrier is a non-woven carrier, preferably a wet-strength long-fibre non-woven material, particularly preferably a tea bag paper.

7. Method according to at least one of the preceding claims, **characterized in that** the thickness of the liner is 45 to 200 µm, preferably 75 to 125 µm.

## Revendications

1. Procédé de fermeture d'une boîte en carton ou d'un emballage en carton, dans lequel
• une bande de carton ou une bande de matière cartonnée est munie d'une bande adhésive double face, dont la face libre est recouverte d'une matière de couverture,
dans lequel la bande adhésive présente un support, qui est garni d'une masse adhésive sur les deux faces et dans lequel la bande adhésive est recouverte au moins sur une face avec une matière de couverture,
dans lequel on utilise comme matière de couverture un film de polyoléfine avec un allongement à la déchirure d'au moins 200 % et une résistance à la déchirure d'au moins 12 N/mm² selon la méthode d'essai DIN EN ISO 527-3, édition 2003, et
la matière de couverture présente un allongement à la déchirure au moins cinq fois plus élevé que l'allongement à la déchirure du support et/ou une résistance à la déchirure au moins 1,5 fois plus élevée que celle du support selon la méthode d'essai DIN EN ISO 527-3, édition 2003,
• découpage des coupons à plier individuels de la boîte en carton, de telle manière que la bande adhésive s'étende sur un volet de la boîte en carton et se termine à une région d'onglet, qui se trouve sur le volet,
• perforation de la ligne entre la région de l'onglet et le volet,
• dépliage de la boîte en carton,
• séparation de la région de l'onglet du volet sur la ligne de perforation,
• en l'occurrence, séparation simultanée de la bande adhésive,
• enlèvement de la matière de couverture de la bande adhésive à l'aide de l'onglet,
• pression de la bande adhésive et donc du volet sur la boîte en carton.

2. Procédé selon la revendication 1, **caractérisé en ce que** la ligne de perforation traverse en plus la bande adhésive et est orientée perpendiculairement à la direction longitudinale de la bande adhésive.

3. Procédé selon la revendication 1 ou 2, **caractérisé en ce que** la bande adhésive présente un support, sur lequel des masses adhésives sont déposées sur les deux faces.

4. Procédé selon au moins une des revendications précédentes, **caractérisé en ce que** le support présente un allongement à la déchirure de 4 % au maximum et une résistance à la déchirure de 15 N/mm² au maximum selon la méthode d'essai DIN EN ISO 527-3, édition 2003, en particulier un allongement à la déchirure valant au maximum 0,05 fois celui de la matière de couverture et/ou une résistance à la déchirure valant au maximum 0,6 fois celle de la matière de couverture selon la méthode d'essai DIN EN ISO 527-3, édition 2003.

5. Procédé selon au moins une des revendications précédentes, **caractérisé en ce que** la matière de couverture se compose de LDPE.

6. Procédé selon au moins une des revendications précédentes, **caractérisé en ce que** le support est un support en non-tissé, de préférence un non-tissé à longues fibres résistant à l'humidité, de préférence encore un papier pour sachets de thé.

7. Procédé selon au moins une des revendications précédentes, **caractérisé en ce que** l'épaisseur de la doublure vaut 45 à 200 µm, de préférence 75 à 125 µm.
